# EUROPEAN PATENT SPECIFICATION

(11) **EP 2 915 971 B1**
(45) Date of publication and mention of the grant of the patent: **15.02.2017**
(21) Application number: 15157338.3
(22) Date of filing: 03.03.2015
(51) Int. Cl.: F01N 3/30, F02B 75/22, F02B 61/02, F02M 23/00, B62K 11/00, B62K 11/04, B60K 13/02

(54) **Saddle type vehicle**
Motorrad
Véhicule à selle

(30) Priority: 05.03.2014 JP 2014042547; 06.06.2014 JP 2014118193
(43) Date of publication of application: 09.09.2015
(73) Proprietor: HONDA MOTOR CO., LTD., Tokyo, 107-8556 (JP)
(72) Inventor: Nishimura, Shin, Wako-shi, Saitama 651-0193 (JP); Kontani, Masahiro, Wako-shi, Saitama 351-0193 (JP)
(74) Representative: Stevens, Jason Paul

(56) References cited:
- JP-A- S58 185 920
- JP-A- S59 194 024
- JP-A- 2001 355 439
- JP-A- 2007 009 707

## Description

The present invention relates to a saddle type vehicle provided with a secondary air supply system.

A saddle type vehicle provided with a secondary air supply system for clarifying an exhaust gas by combustion of unburned components present in the exhaust gas is already known (see, for example, Japanese Patent No. 4704127, and in particular FIG. 2 thereof).

As shown in FIG. 2 of Japanese Patent No. 4704127, an air cleaner (17) (the reference symbols in parentheses are the reference symbols as used in Japanese Patent No. 4704127) is disposed on an upper side of an engine (E) mounted on the saddle type vehicle, and a secondary air supply system is disposed between the air cleaner (17) and an exhaust passage (35) extending from the engine (E). The secondary air supply system includes a secondary air inlet passage (36) through which cleaned air is supplied into the exhaust passage (35).

The engine (E) in Japanese Patent No. 4704127 is a two-cylinder engine in which the two cylinders of the engine are arranged in a line extending along the transverse direction of the vehicle. In an engine with a different cylinder layout, for example, in a so-called V-type engine in which a plurality of cylinders are arranged in a V-shaped configuration with a crankshaft at the vertex of the V shape, a preferred layout for the secondary air supply system may be different from that in the above-mentioned type.

JP 58 185 920 A shows a further arrangement of a secondary air supply system for purifying exhaust in a V-shaped space between a front and a rear motorcycle engine blocks.

It is desirable to develop a technology that enables an efficient and compact layout of a secondary air supply system in a V-type engine which includes a front cylinder or cylinders and a rear cylinder or cylinders.

It is an object of at least the preferred embodiments of the present invention to provide a technology by which a secondary air supply system can be arranged efficiently and compactly in a V-type engine which includes a front cylinder and a rear cylinder.

According to a first aspect of the invention, there is provided a saddle type vehicle comprising: a body frame; an engine mounted on the body frame, the engine including a front cylinder directed toward a front side of the vehicle and a rear cylinder directed toward a rear side of the vehicle; an air cleaner disposed in a space defined between the front cylinder and the rear cylinder at an upper part of the engine; and a secondary air supply system having a reed valve between the air cleaner and an exhaust passage of the engine, the secondary air supply system adapted to supply secondary air from the air cleaner into the exhaust passage of the engine or to stop the supply of the secondary air, wherein an intake duct for guiding air into the air cleaner is connected to a side of the air cleaner, the reed valve includes a front reed valve used for the front cylinder and a rear reed valve used for the rear cylinder, and the front reed valve is disposed at a front portion of the air cleaner, and the rear reed valve is disposed at a rear portion of the air cleaner.

With this arrangement, the intake duct, the front reed valve and the rear reed valve are respectively disposed in different positions, namely, at the side, the front portion and the rear portion of the air cleaner. Therefore, interference among these component parts can be prevented from occurring, and it is possible to arrange the intake duct, the front reed valve and the rear reed valve efficiently and compactly.

Preferably, the air cleaner includes a case body and an element provided inside the case body, the case body is partitioned by the element into a clean side and a dirty side, the clean side being formed at an upper side of the case body, and the dirty side being formed at a lower side of the case body, and the intake duct is connected to the dirty side, and the secondary air supply system is connected to the clean side.

Thus, the intake duct and the secondary air supply system are connected respectively to the lower side and the upper side of the air cleaner. This enables the intake duct and the secondary air supply system to be spaced away from each other. As a result, the intake duct and the secondary air supply system can be arranged efficiently, while preventing any interference between the intake duct and the secondary air supply system.

Preferably, the secondary air supply system is provided further with a solenoid valve adapted to supply air in the clean side to the secondary air supply system or to stop the supply of the air, with the solenoid valve and the front reed valve being connected by an upstream front pipe line, and the solenoid valve and the rear reed valve being connected by an upstream rear pipe line, and a ceiling wall of the air cleaner is formed with a stepped portion provided with a difference in height, and the solenoid valve, the upstream front pipe line and the upstream rear pipe line are disposed on the side of a lower part of the stepped portion.

Since the secondary air supply system is disposed utilizing the stepped portion of the air cleaner, the secondary air supply system can be arranged compactly.

Preferably, the case body is formed, at a front lower portion thereof, with a recessed portion in which the front reed valve may be disposed so as to be surrounded by a wall portion of the case body.

Since the front reed valve is surrounded by the recessed portion of the case body, the reed valve can be protected. Besides, interferences between the reed valve and the component parts arranged in the surroundings of the reed valve can be avoided.

In a further preferred form, the recessed portion is provided with a projection for positioning the front reed valve.

With the positioning projections thus provided, it is possible to enhance workability in assembling (or mounting) the front reed valve.

Preferably, a stay member for fastening and fixing the rear reed valve is provided on a rear wall of the case body.

With the rear reed valve fastened utilizing the stay member, which is provided as a separate body from the case body, it is unnecessary to provide a wall of the case body with an elongated surface for fixing the rear reed valve. As a result, a greater degree of freedom in regard to the shape of the case body can be secured, even in the case where the rear reed valve is to be mounted to the case body.

Preferably, the case body is divided into an upper portion and a lower portion, with a parting face thereof being slanted with respect to a longitudinal direction of the vehicle, and the front reed valve is disposed on a lower half of the case body, with the front reed valve and the rear reed valve being arranged at substantially equal heights.

With this arrangement, where the front reed valve and the rear reed valve are arranged at substantially equal heights (notwithstanding the slope of the parting face of the case body), it is possible to realize a well-balanced weight distribution while rendering the case body vertically compact.

Preferably, the body frame includes a head pipe, and a pair of main frames extending rearward from the head pipe, the engine and the air cleaner are disposed between the pair of main frames, and the pair of main frames and the front reed valve overlap each other in a side view of the vehicle.

As the main frames and the front reed valve overlap each other in a side view of the vehicle, the front reed valve is arranged so as to be hidden behind the main frames in side view of the vehicle, and so can be protected on the lateral sides of the vehicle.

Preferably, the front cylinder includes a plurality of cylinders arranged in a row in a transverse direction of the vehicle, the front reed valve includes a plurality of reed valves with front reed valve members arranged in a row in the transverse direction of the vehicle, and the plurality of front reed valve members are housed by a united case member.

With this arrangement, the plurality of front reed valve members can be arranged compactly. In addition, an increase in the number of component parts can be restrained.

Preferably, the rear cylinder includes a plurality of cylinders arranged in a row in a transverse direction of the vehicle, the rear reed valve includes a plurality of reed valves with rear reed valve members arranged in a row in the transverse direction of the vehicle, and the plurality of rear reed valve members are housed by a united case member.

With this arrangement, the plurality of rear reed valve members can be arranged compactly. Besides, an increase in the number of component parts can be suppressed.

Preferably, a fuel tank is disposed on the saddle type vehicle so as to cover an area extending from an upper side of the air cleaner toward a rear side of the vehicle.

Thus, the secondary air supply system is covered by the fuel tank, and so the upper side and the rear side of the secondary air supply system can be protected.

Preferred embodiments of the invention will now be described by way of example only, and with reference to the accompanying drawings, in which:
FIG. 1 is a right side view of a motorcycle according to the present invention;
FIG. 2 is an enlarged view showing an air cleaner and the surrounding area;
FIG. 3 is a plan view of the air cleaner and the surrounding area, taken along arrow 3 in FIG. 2;
FIG. 4 is a perspective view for explaining the structure of the air cleaner;
FIG. 5 is a sectional view for explaining the structure of the air cleaner;
FIG. 6 is a front view of the air cleaner and the surrounding area;
FIG. 7 is a view taken along arrow 7 in FIG. 3, showing a stepped portion formed at an upper surface of the air cleaner;
FIG. 8 is an exploded perspective view for explaining a mounting structure of a front reed valve;
FIG. 9 is a view for explaining a mounting structure of a rear reed valve;
FIG. 10 is a front view of the front reed valve;
FIG. 11 is a sectional view taken along line 11-11 in FIG. 10;
FIG. 12 is a front view of the rear reed valve;
FIG. 13 is a sectional view of a second embodiment of a front reed valve;
   and
FIG. 14 is a sectional view of a third embodiment of a front reed valve.

Preferred embodiments of the present invention will be described in detail below. In the drawings and embodiments, the expressions "up (U)", "down (D)", "front (Fr)", "rear (Rr)", "left (L)" and "right (R)" should be interpreted from the viewpoint of a rider riding on a motorcycle.

A first embodiment of the present invention will now be described.

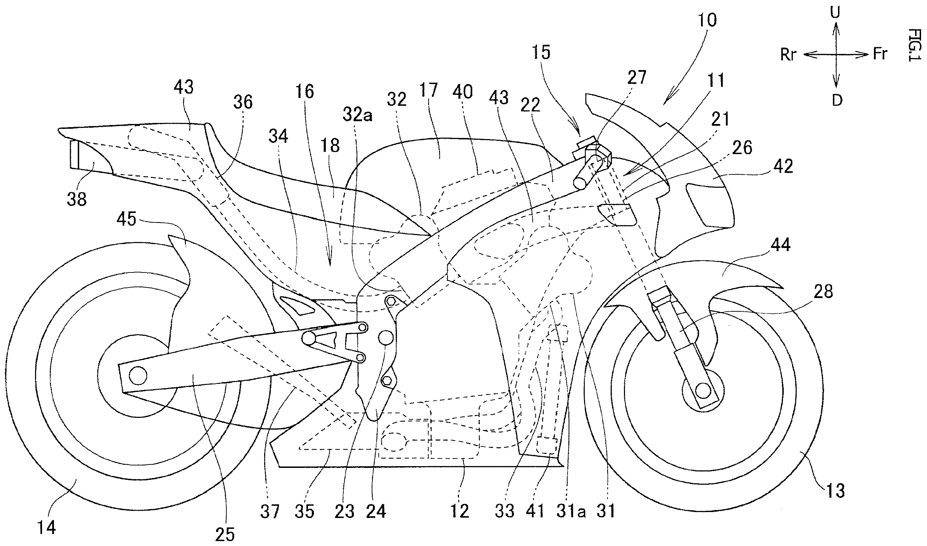

As shown in FIG. 1, a motorcycle 10 is a saddle type vehicle which includes: a body frame 11; an engine 12 as a motive power source that is mounted on the body frame 11; a front wheel steering portion 15 which is provided on a front portion of the body frame 11 forwardly of the engine 12 and by which a front wheel 13 is supported in a steerable manner; a rear wheel suspension unit 16 which is provided at a rear portion of the body frame 11 and by which a rear wheel 14 is supported in a swingable manner; a fuel tank 17 mounted to the body frame 11 upwardly of the engine 12; and a rider seat 18 mounted to the body frame 11 rearwardly of the fuel tank 17. A rider rides the vehicle astride the rider seat 18.

The body frame 11 is composed mainly of: a head pipe 21; a pair of left and right main frames 22 extending rearward from the head pipe 21; and a pivot frame 24 which extends downward from rear ends of the main frames 22 and which supports a pivot shaft 23 serving as a support shaft for the rear wheel suspension unit 16.

The rear wheel suspension unit 16 has a swing arm 25 which extends rearward from the pivot shaft 23 and supports the rear wheel 14 at a rear end thereof. The front wheel steering portion 15 includes: a steering shaft 26 which passes through the head pipe 21 and serves as a rotational shaft; a steering handlebar 27 mounted to an upper end of the steering shaft 26; and a front fork 28 which is provided as one with the steering shaft 26, extends forward and downward, and supports the front wheel 13.

The engine 12 mounted on the body frame 11 is a V-type engine which includes a front cylinder 31 directed toward a front of the vehicle and a rear cylinder 32 directed toward a rear of the vehicle. A front cylinder exhaust pipe 33 is connected to an exhaust port 31 a of the front cylinder 31. The front cylinder exhaust pipe 33 extends forward initially and then extends while bending so as to point rearward. A chamber 35, in which a catalyst is incorporated, is connected to a rear end of the front cylinder exhaust pipe 33. A muffler 37 extends rearward from the chamber 35. A rear cylinder exhaust pipe 34 for guiding an exhaust gas is connected to an exhaust port 32a of the rear cylinder 32. The rear cylinder exhaust pipe 34 extends rearward, and a muffler 38 is connected thereto through a chamber 36, in which a catalyzer is incorporated. An air cleaner 40 is disposed in a space defined between the front cylinder 31 and the rear cylinder 32, on an upper side of the engine 12.

A radiator unit 41 is disposed rearwardly of the front wheel 13 and forwardly of the engine 12. A front of a vehicle body is covered with a cowl 42, and lateral sides of the vehicle body are covered with a body cover 43. A front fender 44 is mounted to the front fork 28 so as to cover an upper side of the front wheel 13. A rear fender 45 is mounted to the swing arm 25 so as to cover a front upper side of the rear wheel 14.

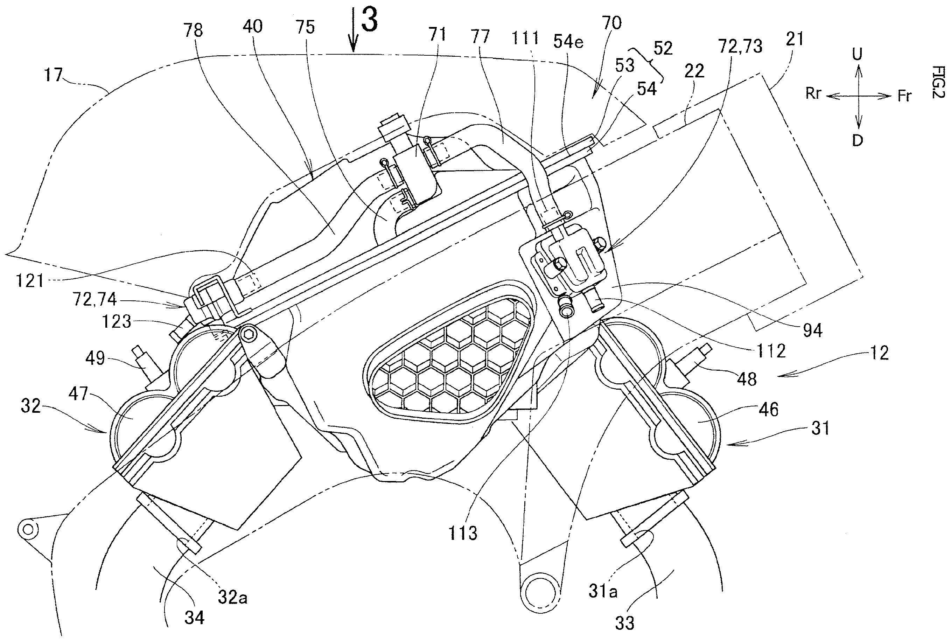

As shown in FIG. 2, an upper end of the front cylinder 31 of the engine 12 is covered with a front head cover 46, and a front igniter (spark plug) 48 is installed on the front head cover 46. Similarly, an upper end of the rear cylinder 32 is covered with a rear head cover 47, and a rear igniter (spark plug) 49 is installed on the rear head cover 47.

The front cylinder 31 includes a plurality of cylinders (here, two cylinders) arranged in a line in the transverse (widthwise or lateral) direction of the vehicle. The front cylinder exhaust pipe 33 for guiding the exhaust gas is connected to the exhaust port 31 a of the front cylinder 31. The rear cylinder 32 includes a plurality of cylinders (here, two cylinders) arranged in a line in the transverse direction of the vehicle. The rear cylinder exhaust pipe 34 for conducting the exhaust gas is connected to the exhaust port 32a of the rear cylinder 32. Thus, the front cylinder 31 includes two cylinders arranged in a line in the transverse direction of the vehicle, and the rear cylinder 32 includes two cylinders arranged in a line in the transverse direction of the vehicle. In other words, the engine 12 is a V-4 type engine, with two front cylinders and two rear cylinders.

The fuel tank 17 is arranged in a region extending from an upper side of the air cleaner 40 (which is disposed in the space defined between the front cylinder 31 and the rear cylinder 32 on the upper side of the engine 12) toward the rear of the vehicle, in such a manner as to cover the air cleaner 40.

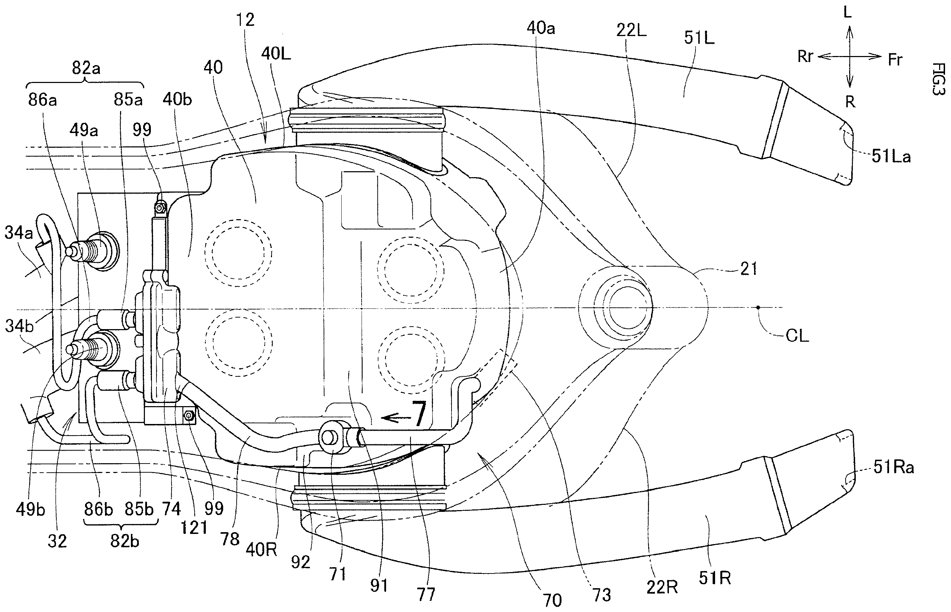

As shown in FIG. 3, the engine 12 and the air cleaner 40 are disposed between the pair of main frames 22L and 22R. Intake ducts 51L and 51 R for introducing air into the air cleaner 40 are connected to lateral side surfaces 40L and 40R of the air cleaner 40. The intake ducts 51 L and 51 R are provided with intake ports 51 La and 51 Ra at front ends thereof.

The structure of the air cleaner will now be described.

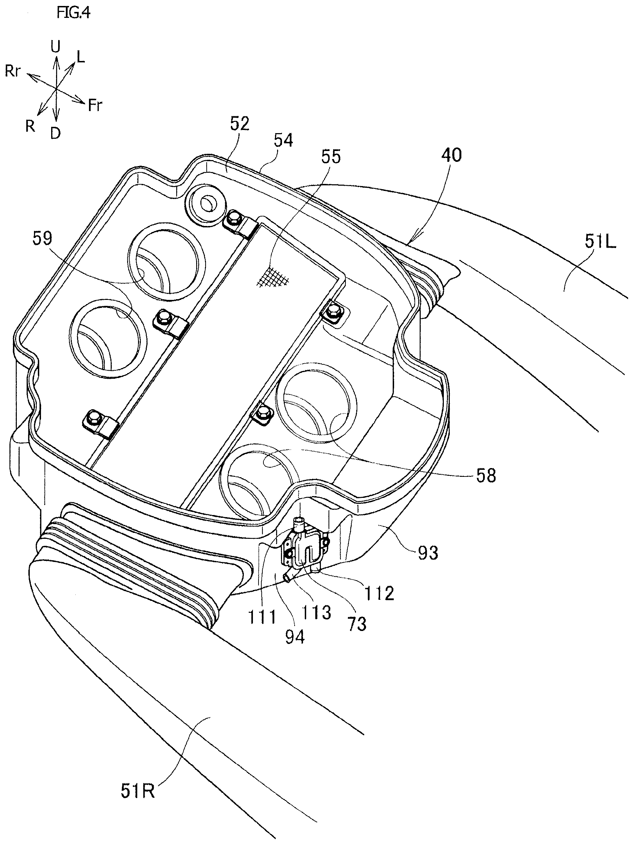

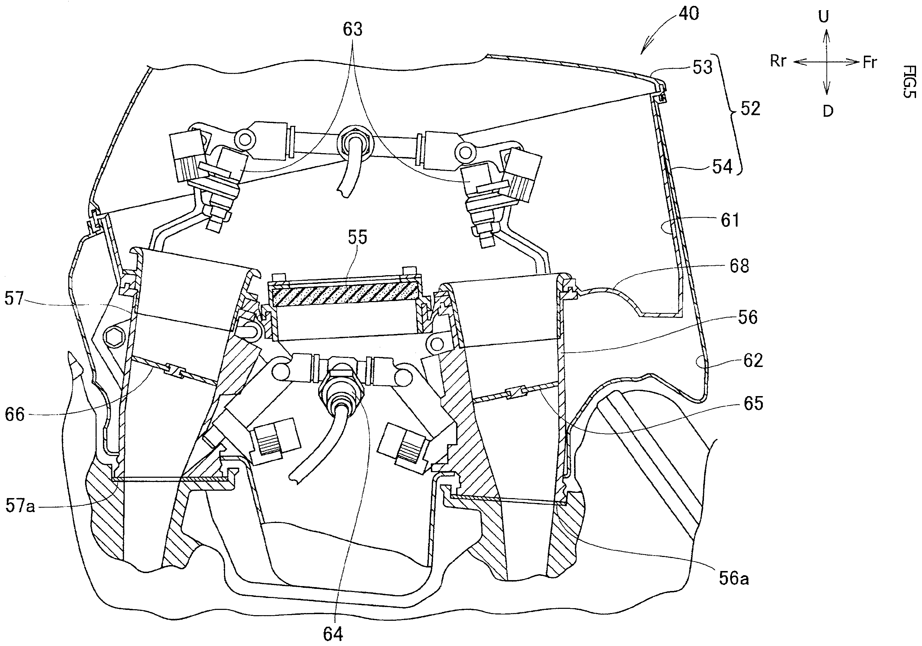

As shown in FIGS. 4 and 5, the air cleaner 40 has a case body 52 and an element (filter element) 55 provided inside the case body 52 so as to filter air, thereby cleaning the air. The case body 52 has an upper half 53 and a lower half 54 which are connected to each other. To the front and rear of the element 55, there are provided front and rear funnel holes 58 and 59 to which front funnels 56 and rear funnels 57 for supplying cleaned air to the front cylinder 31 and the rear cylinder 32 are mounted in an inserted manner.

The case body 52 is partitioned by the element 55 and a partition wall 68 into a clean side 61 and a dirty side 62. In this embodiment, the clean side 61 is the upper side in the case body 52, whereas the dirty side 62 is the lower side in the case body 52. First injection nozzles 63 for supplying an atomized fuel are provided inside the case body 52, and are positioned so as to point towards inlets of the front and rear funnels 56 and 57. A second injection nozzle 64 is provided downstream of the first injection nozzles 63. At intermediate portions in the axial direction in the front and rear funnels 56 and 57, throttle valves 65 and 66 are provided between the first injection nozzle 63 and the second injection nozzle 64. A front seal member 56a for preventing leakage of intake air is interposed between the front cylinder 32 of the engine 12 (see FIG. 2) and the front funnel 56. Similarly, a rear seal member 57a for preventing leakage of intake air is interposed between the rear cylinder 32 of the engine 12 and the rear funnel 57.

Air is taken into the dirty side 62, which constitutes a lower half of the air cleaner 40, from lateral sides of the air cleaner 40 via the intake ducts 51 L and 51 R, and is filtered by the element 55 when flowing through the element 55 into the clean side 61 which constitutes an upper half of the air cleaner 40. The filtered clean air then flows toward the intake side of the engine 12 (see FIG. 2) by way of the front and rear funnels 56 and 57 which are disposed so as to be exposed to the clean side 61.

Now, a secondary air supply system for clarifying the exhaust gas by combustion of combustible components present in the exhaust gas will be described.

Referring back to FIGS. 2 and 3, a secondary air supply system 70 includes: a solenoid valve 71 for allowing supply of the cleaned air in the air cleaner 40 to an exhaust system or stopping the supply of the cleaned air; and reed valves 72 which are provided downstream of the solenoid valve 71 and are individually opened and closed depending on negative pressures in exhaust passages (at the exhaust ports 31 a and 32a) of the engine 12. The reed valves 72 include a front reed valve 73 and a rear reed valve 74. The front reed valve 73 is disposed at a front portion 40a of the air cleaner 40, and the rear reed valve 74 is disposed at a rear portion 40b of the air cleaner 40.

The air cleaner 40 and the solenoid valve 71 are connected by a connection pipe line 75 for supplying the cleaned air from the air cleaner 40 to the solenoid valve 71. The solenoid valve 71 and the front reed valve 73 are connected by an upstream front pipe line 77. The solenoid valve 71 and the rear reed valve 74 are connected by an upstream rear pipe line 78.

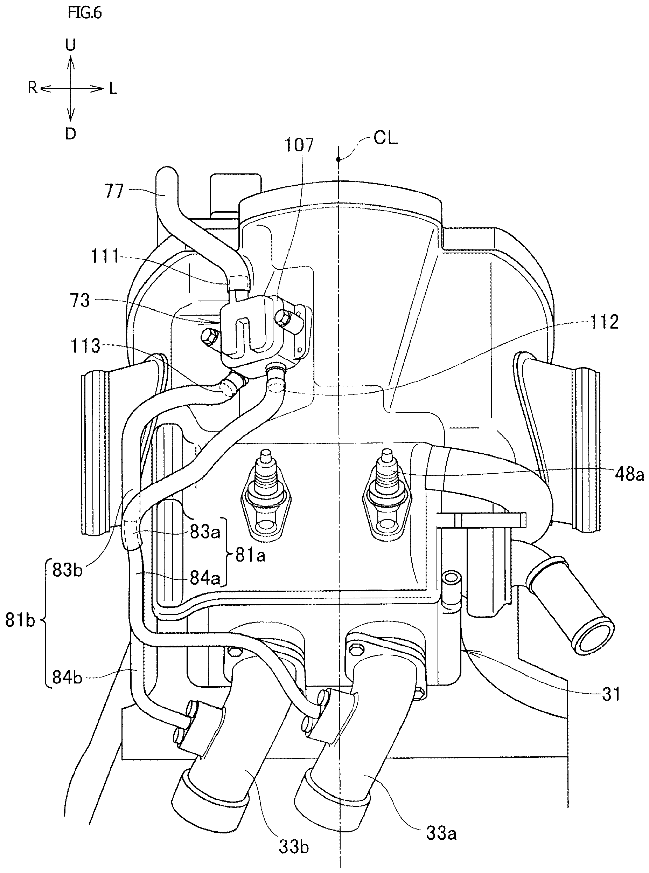

As shown in FIG. 6, front pipe line members 81 a and 81 b extend from the front reed valve 73. Tips of the front pipe line members 81 a and 81 b are connected to the respective exhaust passages (the front cylinder exhaust pipes 33) of the engine 12. Returning to FIG. 3, rear pipe line members 82a and 82b extend from the rear reed valve 74. Tips of the rear pipe line members 82a and 82b are connected to the respective exhaust passages (the rear cylinder exhaust pipes 34) of the engine 12. The rear reed valve 74 and the rear cylinder exhaust pipe 34 are connected by the rear pipe line member 82. In other words, the reed valve 72 is disposed between the air cleaner 40 and the exhaust passage of the engine 12, in such a position as to be exposed to the exhaust passage.

Specifically, the reed valve 72 includes the front reed valve 73 and the rear reed valve 74. The front reed valve 73 and the rear reed valve 74 are used for the front cylinders 31 and the rear cylinders 32, respectively, so as to supply secondary air from the air cleaner 40 into the exhaust passages of the engine 12.

In FIGS. 1 and 6, the front cylinder exhaust pipe 33 initially extends forward and then bends so as to point rearward, with a deviation to a right side with respect to the lateral centreline of the vehicle. The front reed valve 73 is disposed with an offset to the right side with respect to the lateral centreline of the vehicle, that is, it is offset to the same side as the deviation of the front cylinder exhaust pipe 33. The front reed valve 73 is connected to the front cylinder exhaust pipes 33a and 33b by the front pipe line members 81 a and 81 b, respectively. In the drawing, reference character CL denotes the lateral centreline of the vehicle. Note that while the front cylinder exhaust pipes and the front reed valve are disposed with an offset toward the right with respect to the lateral centreline of the vehicle in this embodiment, they may be disposed with an offset toward the left side with respect to the centreline.

The front pipe line members 81 a and 81 b include: front tubes 83a and 83b which extend from the front reed valve 73 and are made of an elastic material with a low thermal conductivity, such as rubber tubes; and metallic front tubes 84a and 84b which extend from ends of the front tubes 83a and 83b and are connected to the front cylinder exhaust pipes 33a and 33b, respectively. Since those portions of the front pipe line members 81 a and 81 b which are connected to the front reed valve 73 (the front tubes 83a and 83b) are formed of an elastic material, thermal influence on the front reed valve 73 due to heat conduction from the front cylinder exhaust pipes 33a and 33b can be reduced. In addition, transfer of vibrations from the front cylinder exhaust pipes 33a and 33b to the front reed valve 73 is reduced.

The front reed valve 73 and the front cylinder exhaust pipes 33a and 33b are both disposed on the right side of the lateral centreline of the vehicle, and are connected by the front pipe line members 81 a and 81 b. Therefore, the lengths of the front pipe line members 81 a and 81 b for connecting the front reed valve 73 to the front cylinder exhaust pipes 33a and 33b can be made shorter. In addition, the front pipe line members 81 a and 81 b can be confirmed (checked) from the lateral outside of the vehicle, leading to an enhanced maintainability.

Referring back to FIG. 3, the rear pipe line members 82a and 82b connecting the rear reed valve 74 and the rear cylinder exhaust pipes 34a and 34b extend rearwardly, to one side of the rear igniters (spark plugs) 49a and 49b.

The rear pipe line members 82 include: rear tubes 85a and 85b which extend from the rear reed valve 74 and are made of an elastic material with a low thermal conductivity, such as rubber tubes; and metallic rear tubes 86a and 86b which extend from ends of the rear tubes 85a and 85b and are connected to the rear cylinder exhaust pipes 34a and 34b, respectively. Since those portions of the rear pipe line members 82a and 82b which are connected to the rear reed valve 74 (the rear tubes 85a and 85b) are composed of an elastic material, thermal influence on the rear reed valve 74 due to heat conduction from the rear cylinder exhaust pipes 34a and 34b can be reduced. In addition, transfer of vibrations from the rear cylinder exhaust pipes 34 to the rear reed valve 74 is reduced.

Returning to FIG. 2, the front reed valve 73 is disposed on the lower half 54 of the case body 52. Further, the front reed valve 73 and the rear reed valve 74 are disposed at substantially equal heights. The pair of main frames 22 and the front reed valve 73 are disposed so as to overlap each other in a side view of the vehicle.

The case body 52 is divided into the upper half 53 and the lower half 54, with a parting face 54e thereof being slanted downwardly and rearwardly, in relation to a horizontal plane extending in the longitudinal direction of the vehicle. In addition, the front reed valve 73 and the rear reed valve 74 are disposed on the case body 52 at substantially equal heights.

Even though the parting face 54e of the case body 52 is slanted along the longitudinal direction of the vehicle, the front reed valve 73 and the rear reed valve 74 are disposed at substantially the same height. This layout makes it possible to realize a well-balanced weight distribution while rendering the case body 52 compact in the vertical direction.

In FIGS. 1 and 3, the rear cylinder exhaust pipes 34a and 34b extend rearward with a deviation toward the right side with respect to the lateral centreline of the vehicle, and the rear reed valve 74 is disposed with an offset to the right side with respect to the lateral centreline of the vehicle, that is the same side as the deviation of the rear cylinder exhaust pipes 34.

The rear cylinder exhaust pipes 34a and 34b and the rear reed valve 74 are thus both disposed with a deviation to a right side, that is, with an offset toward the same side with respect to the lateral centreline of the vehicle. This layout enables a simplification of the piping regarding the rear pipe line members 82a and 82b for connecting the rear reed valve 74 and the rear cylinder exhaust pipes 34a and 34b.

Now, the layout of the solenoid valve and the surroundings thereof will be described.

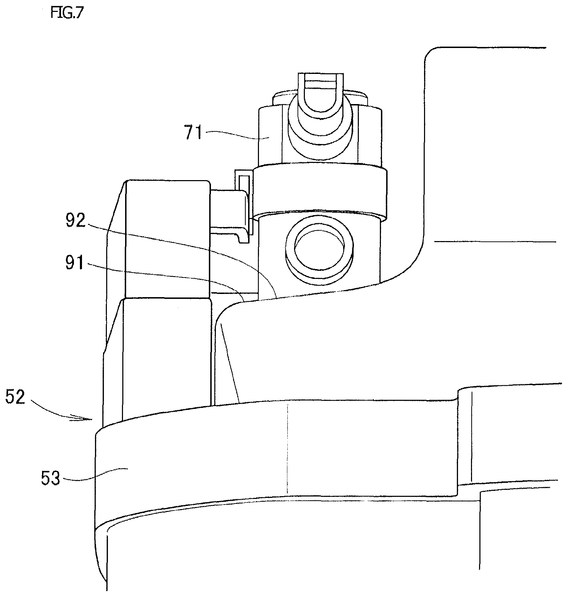

As depicted in FIG. 7, a ceiling wall 91 constituting the upper half 53 of the air cleaner case (case body 52) is formed with a stepped portion 92 where a difference in height is provided. In the figure, the upstream front pipe line is omitted. Referring also to FIG. 3, the solenoid valve 71, the upstream front pipe line 77 and the upstream rear pipe line 78 are disposed on the side of a lower part of the stepped portion 92.

Thus, the solenoid valve 71, the upstream front pipe line 77 and the upstream rear pipe line 78 are disposed on the side of the lower part of the stepped portion 92 formed as part of the ceiling wall 91 of the air cleaner 40. Since the secondary air supply system 70 is disposed utilizing the lower part side of the stepped portion 92 of the air cleaner 40, the secondary air supply system 70 can be arranged compactly.

Now, a mounting structure for the front reed valve will be described.

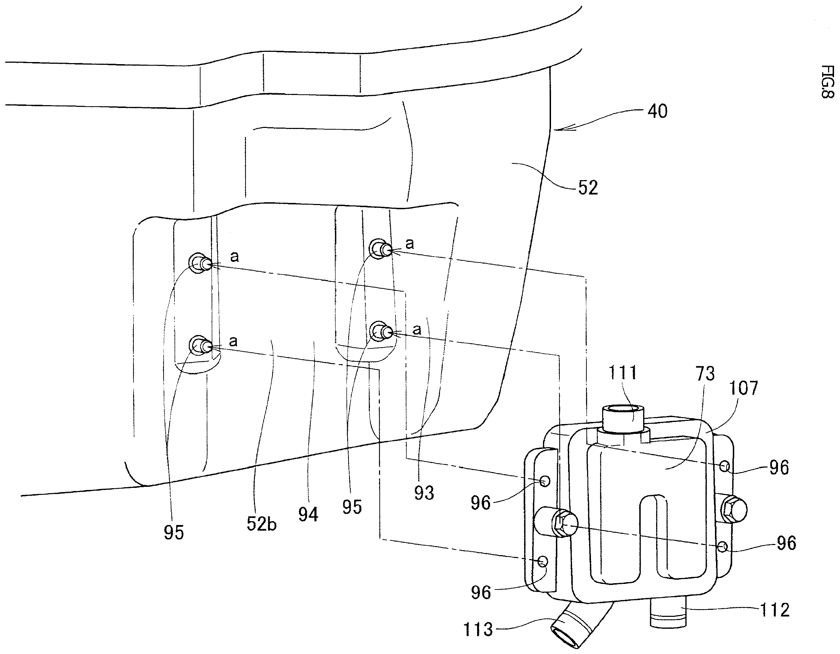

As illustrated in FIG. 8, the case body 52 of the air cleaner 40 is formed, at a front lower portion 52b thereof, with a recessed portion 94 in which the front reed valve 73 can be positioned such that it is surrounded by a wall portion 93 of the case body 52. The recessed portion 94 is provided with four projections 95 for positioning the front reed valve 73.

Thus, the recessed portion 94 in which the front reed valve 73 can be positioned is formed at the front lower portion 52b of the case body 52. Since the front reed valve 73 is surrounded in the recessed portion 94 formed in the case body 52, it is possible to protect the reed valve 72 and to avoid interference between the reed valve 72 and component parts arranged in the surroundings thereof.

In addition, the recessed portion 94 is provided with the four projections 95 for positioning the front reed valve 73. During assembly, four positioning holes 96 provided in the front reed valve 73 are fitted over the positioning projections 95, along the direction of arrows a in FIG. 8. In this case, the positioning projections 95 enable the front reed valve 73 to be easily mounted onto the front lower portion 52b of the case body 52. Accordingly, the workability in assembly or mounting of the front reed valve 73 can be enhanced.

Now, a mounting structure for the rear reed valve will be described.

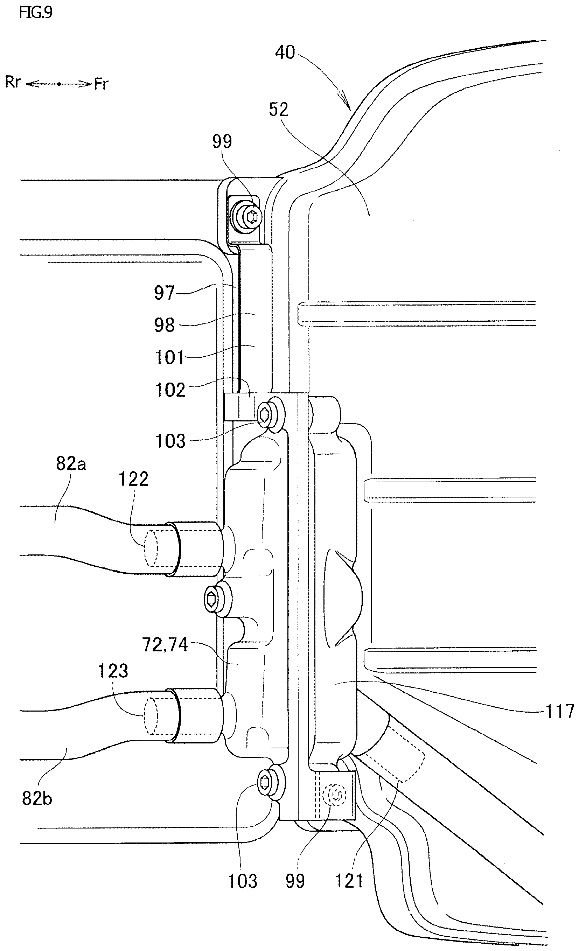

As shown in FIG. 9, a stay member 98 is provided on a rear wall 97 of the case body 52. The rear reed valve 74 is fastened to the rear wall 97 of the case body 52, through stay member 98 therebetween, by screw members 99. The stay member 98 is a member which extends in the transverse direction of the vehicle. The stay member 98 includes: an air cleaner mounting portion 101 which is fastened to the rear wall 97 of the case body 52 of the air cleaner; and a reed valve mounting portion 102 which extends upward from the air cleaner mounting portion 101 (toward the viewer's side of the drawing) and to which the rear reed valve 74 is fastened. The rear reed valve 74 is mounted to the reed valve mounting portion 102 by fastening members 103.

The rear reed valve 74 is thus fastened to the case body 52 utilizing the stay member 98, which is a separate member from the case body 52. This makes it unnecessary to provide a wall of the case body 52 with an elongated surface for fixing the rear reed valve 74 thereto. As a result, a greater degree of freedom regarding the shape of the case body 52 can be secured, even in the case where the rear reed valve 74 is to be mounted to the case body 52.

Now, the front reed valve will be described.

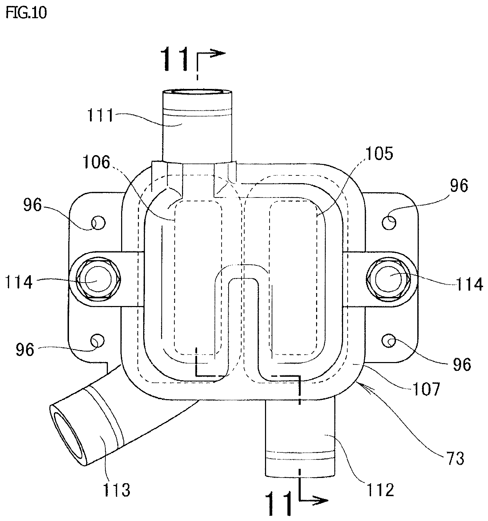

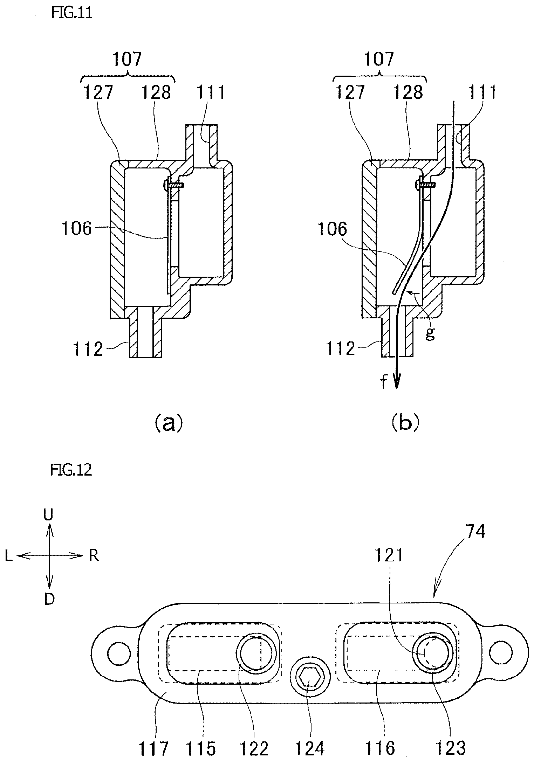

As illustrated in FIG. 10, the front reed valve 73 has left and right valve bodies with valve members 105 and 106, arranged so that the valve members extend generally in the vertical direction. The surroundings of the valve members 105 and 106 are covered with a front case member 107. The front case member 107 has two halves, 127 and 128 (see FIG. 11), which are fastened together by two screws 114. The front case member 107 is provided at an upper position thereof with a front input port 111 into which the upstream front pipe line 77 (see FIG. 6) is to be inserted. The front case member 107 is provided at lower positions thereof with a front first output port 112 and a front second output port 113 into which the front pipe line members 81 a and 81 b (see FIG. 6) are to be inserted, and which serve as outlets for air outputted from the left and right valve bodies.

FIG. 11 is a sectional view taken along line 11-11 of FIG. 10, wherein FIG. 11 (a) shows a state where the reed valve is closed, and FIG. 11 (b) shows a state where the reed valve is open.

In FIGS. 10 and 11(a), the front reed valve 73 includes a plurality of reed valves (with valve members 105 and 106) which are arranged in a row in the transverse direction of the vehicle. The valve members 105 and 106 are arranged such that they extend generally vertically. The plurality of reed valves 105 and 106 constituting the front reed valve 73 are housed by the front case member 107 which is a separate body. The front case member 107 has two halves 127 and 128, which are fastened together by the screws 114 to form the case member 107 as a united body.

Referring to FIGS. 3 and 6 as well, the front cylinder 31 includes two cylinders arranged in a row in the transverse direction of the vehicle. Further, the front reed valve 73 includes the two reed valves 105 and 106 which are used respectively for the front cylinder exhaust pipes 33a and 33b extending from the two cylinders arranged in a row in the transverse direction of the vehicle.

In FIG. 11(b), when the solenoid valve 71 (see FIG. 3) is opened under predetermined conditions and a negative pressure is exerted on the exhaust port 31 a (see FIG. 2), the valve body 106 is moved in the direction of arrow g in the figure by the negative pressure, so that cleaned air flows in the direction of arrow f in the figure, from the front input port 111 toward the front first and front second output ports 112 and 113.

Now, the rear reed valve will be described.

As shown in FIG. 12, the rear reed valve 74 has left and right valve bodies with valve members 115 and 116, arranged so that the valve members extend generally in the transverse direction of the vehicle. The surroundings of the valve members 115 and 116 are covered with a rear case member 117. In the same manner as in the aforementioned front reed valve, the rear case member 117 has two halves fastened together by a screw 124. The rear case member 117 is provided, on a front side, with a rear input port 121 into which to insert the upstream rear pipe line 78. The rear case member 117 is provided, on a rear side, with a first output port 122 and a second output port 123 into which the rear pipe line members 82a and 82b (see FIG. 3) are inserted and which serve as outlets for air outputted from the left and right valve bodies, respectively.

Specifically, the rear reed valve 74 includes a plurality of reed valves (with valve members 115 and 116) which are arranged in a row in the transverse direction of the vehicle, with the valve members extending generally in the transverse direction of the vehicle. The rear reed valve 74 is housed by the rear case member 117 which is a united body. The operation of the rear reed valve 74 is similar to that of the aforementioned front reed valve, so that description thereof is omitted here.

Since the plurality of the rear reed valves (with valve members 115 and 116) are housed by the case member 117 which is a united body, the plurality of rear reed valves can be arranged compactly. In addition, an increase in the number of component parts can be restrained.

Referring to FIG. 3 also, the rear reed valve 74 includes the plurality of reed valves (with valve members 115 and 116) corresponding to the plurality of rear cylinders 32 which are arranged in a row in the transverse direction of the vehicle. The plurality of reed valves are arranged in a row in the transverse direction of the vehicle. Therefore, the rear pipe line members 82a and 82b connecting the rear exhaust pipes (rear cylinder exhaust pipes 34) and the rear reed valve 74 can be arranged compactly and efficiently.

Referring to FIGS. 2 and 3 also, in the case where a space surrounded by the main frames 22 and the air cleaner 40 has a margin in the vertical direction, the reed valves (with valve members 105 and 106) are so arranged that the valve members extend in the vertical direction. In the case where the space surrounded by the main frames 22 and the air cleaner 40 has a margin in the transverse direction of the vehicle, on the other hand, the reed valves (with valve members 115 and 116) are so arranged that the valve members extend in the transverse direction of the vehicle.

The rear cylinder 32 includes two cylinders which are arranged in a row in the transverse direction of the vehicle. The rear reed valve 74 includes the two reed valve members 115 and 116 which are used respectively for rear cylinder exhaust pipes 34 extending from the two cylinders arranged in a row in the transverse direction of the vehicle.

Since the plurality of front reed valves (with valve members 105 and 106) are housed by the front case member 107 which is a united body, the plurality of front reed valve members can be arranged compactly. In addition, an increase in the number of component parts can be restrained.

The front reed valve 73 includes the plurality of reed valves (with valve members 105 and 106) corresponding to the plurality of front cylinders 31 which are arranged in a row in the transverse direction of the vehicle. The plurality of reed valves are arranged in a row in the transverse direction of the vehicle. Therefore, the front pipe line members 81 connecting the front exhaust pipes (front cylinder exhaust pipes 33) and the front reed valves (with valve bodies 105 and 106) can be arranged compactly and efficiently.

An operation of the aforementioned saddle type vehicle will now be described.

Referring back to FIG. 3, the intake ducts 51 L and 51 R are connected respectively to left and right side surfaces of the air cleaner 40. The front reed valve 73 is disposed at the front portion 40a of the air cleaner 40, and the rear reed valve 74 is disposed at the rear portion 40b of the air cleaner 40. Thus, the intake ducts 51 L and 51 R, the front reed valve 73 and the rear reed valve 74 are arranged respectively in different positions, namely, at the side surfaces 40L and 40R, the front portion 40a and the rear portion 40b of the air cleaner 40. Therefore, interference among these components can be prevented from occurring. In addition, the intake ducts 51 L and 51 R, the front reed valve 73 and the rear reed valve 74 can be arranged efficiently and compactly.

The front reed valve 73 is disposed at the front portion 40a of the air cleaner 40 rearwardly of the head pipe 21, and is arranged so as to extend generally vertically. In the region behind the head pipe 21 and in front of the air cleaner 40, it is easier to secure a vertical space than to secure a transverse space. Since the front reed valve 73 is disposed at the front portion 40a of the air cleaner 40 in such a manner that the valve members extend generally vertically, the front reed valve 73 can be arranged efficiently and compactly.

In addition, the rear reed valve 74 is disposed at the rear portion 40b of the air cleaner 40 between the pair of main frames 22, and is arranged so as to extend generally in the transverse direction of the vehicle. In the region to the rear of the air cleaner 40, it is easier to secure a transverse space than to secure a vertical space.

Since the rear reed valve 74 is thus disposed at the rear portion 40b of the air cleaner 40 in such a manner that the valve members extend generally in the transverse direction of the vehicle, the rear reed valve 74 can be arranged efficiently and compactly. Since the front reed valve 73 and the rear reed valve 74 can be arranged compactly, an influence of the reed valve 72 on those component parts which are disposed in the surroundings of the reed valve 72 can be reduced.

Referring also to FIG. 5, in the case body 52 having the dirty side 62 formed on the lower side and the clean side 61 on the upper side, the intake ducts 51 L and 51 R are connected to the dirty side 62, whereas the secondary air supply system 70 is connected to the clean side 61. Thus, the intake ducts 51 L and 51 R and the secondary air supply system 70 are connected respectively to the lower side and the upper side of the air cleaner 40, and so the intake ducts 51 L and 51 R and the secondary air supply system 70 can be spaced apart from each other. As a result, there is less risk of interference between the intake ducts 51 L and 51 R and the secondary air supply system 70, and it is possible to efficiently arrange the intake ducts 51 L and 51 R and the secondary air supply system 70.

Referring back to FIG. 2, the fuel tank 17 is disposed so as to cover a space extending from the upper side to the rear side of the air cleaner 40 where the secondary air supply system 70 is provided. Thus, the secondary air supply system 70 is covered by the fuel tank 17, and so the upper side and the rear side of the secondary air supply system 70 can be protected.

Besides, the main frames 22 and the front reed valve 73 overlap each other in a side view of the vehicle. Since the front reed valve 73 is arranged so as to be hidden behind the main frames 22 in a side view of the vehicle, the left and right sides of the front reed valve 73 can be protected.

Furthermore, on a lateral side of the rear igniters (spark plugs) 49, the rear pipe line members 82 for connecting the rear reed valve 74 and the rear cylinder exhaust pipes 34 extend from the front toward the rear of the vehicle. With the rear pipe line members 82 thus arranged so as not to protrude above the rear igniters (spark plugs) 49 provided for the rear cylinders 32, the rear pipe line members 82 can be arranged compactly and efficiently.

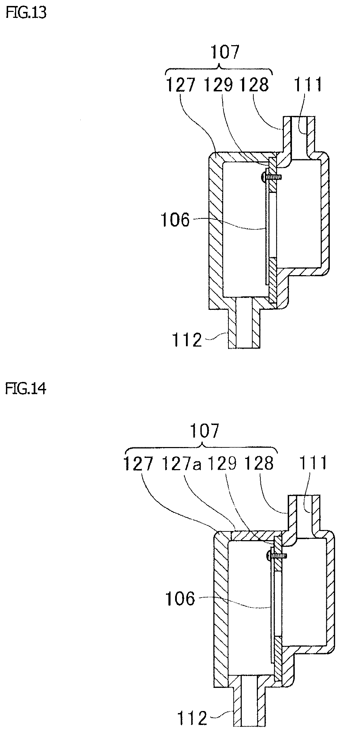

Now, a second embodiment of the present invention will be described referring to the drawings and in particular FIG. 13. Note that components in FIG. 13 which are the same as those shown in FIG. 11 (a) are denoted by the same reference symbols as used in FIG. 11 (a), and detailed descriptions of the components will be omitted here.

As depicted in FIGS. 10 and 13, a front reed valve 73 includes a plurality of reed valves (with valve members 105 and 106). The valve members 105 and 106 are arranged so that they extend generally vertically. The plurality of reed valve members 105 and 106 constituting the front reed valve 73 are housed by a front case member 107 provided as a separate body.

The front case member 107 includes one half 127, another half 128, and a partition portion 129 clamped between the halves 127 and 128. The front case member 107 has the one half 127 fastened to the other half 128 by screws 114 to form the case member 107 as a united body. With the front case member 107 thus configured by three component parts (the one half 127, the partition portion 129 and the other half 128), the individual component parts can be easily moulded. In addition, with the partition portion 129 clamped between the other half 128 and the one half 127, the front case member 107 can be simplified in structure. In addition, the partition portion 129 has an opening in its central portion, where the valve member 106 is provided. When the solenoid valve 71 (see FIG. 3) is opened under predetermined conditions and a negative pressure is exerted on the exhaust port 31 a (see FIG. 2), the valve is opened by the negative pressure. Consequently, cleaned air flows from the front input port 111 toward the side of the front first and front second output ports 112 and 113.

Now, a third embodiment of the present invention will be described referring to the drawings, and in particular FIG. 14. Note that components in FIG. 14 which are the same as those depicted in FIG. 11 (a) are denoted by the same reference symbols as used in FIG. 11 (a), and detailed description of the components will be omitted here.

As illustrated in FIGS. 10 and 14, a front reed valve 73 includes a plurality of reed valves (with valve members 105 and 106). The valve members 105 and 106 are arranged so that they extend generally vertically. The plurality of reed valve members 105 and 106 constituting the front reed valve 73 are housed by a front case member 107 provided as a separate body.

The front case member 107 includes one half 127, a peripheral wall portion 127a extending from a peripheral edge of the one half 127, another half 128, and a partition portion 129 clamped between the other half 128 and the peripheral wall portion 127a. The front case member 107 has the one half 127 fastened to the other half 128 by screws 114 to form the case member 107 as a united body. With the front case member 107 thus configured by four component parts (the one half 127, the peripheral wall portion 127a, the partition portion 129 and the other half 128), the individual component parts can be moulded more easily. In addition, the partition portion 129 has an opening in its central portion, where the valve member 106 is provided. When the solenoid valve 71 (see FIG. 3) is opened under predetermined conditions and a negative pressure is exerted on the exhaust port 31 a (see FIG. 2), the valve is opened by the negative pressure. Consequently, cleaned air flows from the front input port 111 toward the side of the front first and front second output ports 112 and 113.

Note that while the present invention is applied to a motorcycle in the preferred embodiments, the invention can be applied to three-wheeled vehicles, and may be applied to vehicles more generally.

The number of the reed valves arranged in the transverse direction of the vehicle may be varied according to the number of the cylinders arranged in the transverse direction of the vehicle. For instance, in the case where three cylinders are arranged in the transverse direction of the vehicle, three reed valves may be arranged in the transverse direction of the vehicle.

The present invention is suitable for application to a motorcycle provided with a secondary air supply system including a reed valve.

## Claims

1. A saddle type vehicle comprising:
a body frame (11);
an engine (12) mounted on the body frame (11), the engine (12) including a front cylinder (31) directed toward a front side of the vehicle and a rear cylinder (32) directed toward a rear side of the vehicle;
an air cleaner (40) disposed in a space defined between the front cylinder (31) and the rear cylinder (32) at an upper part of the engine (12); and
a secondary air supply system (70) having a reed valve (72) between the air cleaner (40) and an exhaust passage of the engine (12), the secondary air supply system (70) adapted to supply secondary air from the air cleaner (40) into the exhaust passage of the engine (12) or to stop the supply of the secondary air,
wherein an intake duct (51 L, 51 R) for guiding air into the air cleaner (40) is connected to a side of the air cleaner (40),
the reed valve (72) includes a front reed valve (73) used for the front cylinder (31) and a rear reed valve (74) used for the rear cylinder (32), the saddle type vehicle being **characterized in that**,
the front reed valve (73) is disposed at a front portion of the air cleaner (40), and the rear reed valve (74) is disposed at a rear portion of the air cleaner (40).

2. The saddle type vehicle according to claim 1,
wherein the air cleaner (40) includes a case body (52) and an element (55) provided inside the case body (52),
the case body (52) is partitioned by the element (55) into a clean side (61) and a dirty side (62), the clean side (61) being formed at an upper side of the case body (52), and the dirty side (62) being formed at a lower side of the case body (52), and
the intake duct (51 L, 51 R) is connected to the dirty side (62), and the secondary air supply system (70) is connected to the clean side (61).

3. The saddle type vehicle according to claim 1 or 2,
wherein the secondary air supply system (70) is provided further with a solenoid valve (71) adapted to supply air in the clean side (61) to the secondary air supply system (70) or to stop the supply of the air, with the solenoid valve (71) and the front reed valve (73) being connected by an upstream front pipe line (77), and the solenoid valve (71) and the rear reed valve (74) being connected by an upstream rear pipe line (78), and
a ceiling wall (91) of the air cleaner (40) is formed with a stepped portion (92) provided with a difference in height, and the solenoid valve (71), the upstream front pipe line (77) and the upstream rear pipe line (78) are disposed on the side of a lower part of the stepped portion (92).

4. The saddle type vehicle according to any preceding claim,
wherein the case body (52) is formed, at a front lower portion thereof, with a recessed portion (94) in which the front reed valve (73) may be disposed so as to be surrounded by a wall portion (93) of the case body (52).

5. The saddle type vehicle according to claim 4,
wherein the recessed portion (94) is provided with a projection (95) for positioning the front reed valve (73).

6. The saddle type vehicle according to any one of claims 2 to 5,
wherein a stay member (98) for fastening and fixing the rear reed valve (74) is provided on a rear wall (97) of the case body (52).

7. The saddle type vehicle according to any one of claims 2 to 6,
wherein the case body (52) is divided into an upper portion and a lower portion, with a parting face (54e) thereof being slanted with respect to a longitudinal direction of the vehicle, and
the front reed valve (73) is disposed on a lower half (54) of the case body (52), with the front reed valve (73) and the rear reed valve (74) being arranged at substantially equal heights.

8. The saddle type vehicle according to any preceding claim,
wherein the body frame (11) includes a head pipe (21), and a pair of main frames (22L, 22R) extending rearward from the head pipe (21),
the engine (12) and the air cleaner (40) are disposed between the pair of main frames (22L, 22R), and
the pair of main frames (22L, 22R) and the front reed valve (73) overlap each other in a side view of the vehicle.

9. The saddle type vehicle according to any preceding claim,
wherein the front cylinder (31) includes a plurality of cylinders arranged in a row in a transverse direction of the vehicle,
the front reed valve (73) includes a plurality of reed valves with front reed valve members (105, 106) arranged in a row in the transverse direction of the vehicle, and
the plurality of front reed valve members (105, 106) are housed by a united case member (107).

10. The saddle type vehicle according to any preceding claim,
wherein the rear cylinder (32) includes a plurality of cylinders arranged in a row in a transverse direction of the vehicle,
the rear reed valve (74) includes a plurality of reed valves with rear reed valve members (115, 116) arranged in a row in the transverse direction of the vehicle, and
the plurality of rear reed valve members (115, 116) are housed by a united case member (117).

11. The saddle type vehicle according to any preceding claim,
wherein a fuel tank (17) is disposed on the saddle type vehicle so as to cover an area extending from an upper side of the air cleaner (40) toward a rear side of the vehicle.

## Patentansprüche

1. Satteltyp - Fahrzeug umfassend:
einen Karosserierahmen (11);
einen Motor (12), welcher an den Karosserierahmen (11) angebracht ist, der Motor (12) umfassend einen vorderen Zylinder (31), welcher in Richtung auf eine Vorderseite von dem Fahrzeug gerichtet ist, und einen hinteren Zylinder (32), welcher in Richtung auf eine Rückseite von dem Fahrzeug gerichtet ist;
einen Luftfilter (40), welcher in einem Raum, welcher zwischen dem vorderen Zylinder (31) und dem hinteren Zylinder (32) definiert ist, bei einem oberen Teil von dem Motor (12) angeordnet ist; und
einem sekundären Luftzufuhrsystem (70), aufweisend ein Membranventil (72) zwischen dem Luftfilter (40) und einem Abgasdurchgang von dem Motor (12), wobei das sekundäre Luftzufuhrsystem (70) angepasst ist, um sekundäre Luft von dem Luftfilter (40) in den Abgasdurchgang von dem Motor (12) zuzuführen oder die Zufuhr von der sekundären Luft zu stoppen,
wobei ein Ansaugtrakt (51L, 51R) zum Leiten von Luft in den Luftfilter (40) zu einer Seite von dem Luftfilter (40) verbunden ist,
das Membranventil (72) umfasst ein vorderes Membranventil (73), welches für den vorderen Zylinder (31) verwendet wird und ein hinteres Membranventil (74), welches für den hinteren Zylinder (32) verwendet wird,
das Satteltyp - Fahrzeug ist **dadurch gekennzeichnet, dass**
das vordere Membranventil (73) bei einem vorderen Abschnitt von dem Luftfilter (40) angeordnet ist, und das hintere Membranventil (74) bei einem hinteren Abschnitt von dem Luftfilter (40) angeordnet ist.

2. Das Satteltyp - Fahrzeug nach Anspruch 1,
wobei der Luftfilter (40) einen Gehäusekörper (52) und ein Element (55), welches innerhalb von dem Gehäusekörper (52) vorgesehen ist, umfasst,
der Gehäusekörper (52) ist durch das Element (55) in eine Reinseite (61) und eine Schmutzseite (62) unterteilt, die Reinseite (61) ist bei einer oberen Seite von dem Gehäusekörper (52) geformt, und die Schmutzseite (62) ist bei einer unteren Seite von dem Gehäusekörper (52) geformt, und
der Ansaugtrakt (51L, 51R) ist zu der Schmutzseite (62) verbunden, und das sekundäre Luftzufuhrsystem (70) ist zu der Reinseite (61) verbunden.

3. Das Satteltyp - Fahrzeug nach Anspruch 1 oder 2,
wobei das sekundäre Luftzufuhrsystem (70) des Weiteren mit einem Magnetventil (71) vorgesehen ist, angepasst, um Luft in die Reinseite (61) zu dem sekundären Luftzufuhrsystem (70) zuzuführen oder die Zufuhr von der Luft zu stoppen, mit dem Magnetventil (71) und dem vorderen Membranventil (73) verbunden seiend durch eine vorgelagerte Rohrleitung (77), und das Magnetventil (71) und das hintere Membranventil (74) verbunden seiend durch eine nachgelagerte Rohrleitung (78), und
eine Deckenwand (91) von dem Luftfilter (40) ist mit einem gesteppten Abschnitt (92) mit einem Höhenunterschied geformt, und das Magnetventil (71), die vorgelagerte Rohrleitung (77) und die nachgelagerte Rohrleitung (78) sind auf der Seite von einem unteren Teil von dem gesteppten Abschnitt (92) angeordnet.

4. Das Satteltyp - Fahrzeug nach irgendeinem vorhergehenden Anspruch,
wobei der Gehäusekörper (52) geformt ist, bei seinem vorderen unteren Abschnitt davon, mit einem ausgesparten Abschnitt (94), in welchem das vordere Membranventil (73) angeordnet sein kann, um so durch einen Wandabschnitt (93) von dem Gehäusekörper (52) umgeben zu sein.

5. Das Satteltyp - Fahrzeug nach Anspruch 4,
wobei der ausgesparte Abschnitt (94) mit einem Vorsprung (95) zum Positionieren von dem vorderen Membranventils (73) vorgesehen ist.

6. Das Satteltyp - Fahrzeug nach irgendeinem der Ansprüche 2 bis 5,
wobei ein Stützelement (98) zum Befestigen und Festlegen von dem hinteren Membranventil (74) an einer hinteren Wand (97) von dem Gehäusekörper (52) vorgesehen ist.

7. Das Satteltyp - Fahrzeug nach irgendeinem der Ansprüche 2 bis 6,
wobei der Gehäusekörper (52) in einen oberen und einen unteren Teil unterteilt ist, mit einer Trennfläche (54e) davon, welche in Bezug zu einer länglichen Richtung von dem Fahrzeug geneigt ist, und
das vordere Membranventil (73) ist an einer unteren Hälfte (54) von dem Gehäusekörper (52) angeordnet, mit dem vorderen Membranventil (73) und dem hinteren Membranventil (74) bei im Wesentlichen gleichen Höhen verbunden seiend.

8. Das Satteltyp - Fahrzeug nach irgendeinem vorhergehenden Anspruch,
wobei der Karosserierahmen (11) ein Kopfrohr (21) umfasst, und ein Paar von Hauptrahmen (22L, 22R), welche sich nach hinten von dem Kopfrohr (21) erstrecken,
der Motor (12) und der Luftfilter (40) sind zwischen dem Paar von Hauptrahmen (22L, 22R) angeordnet, und
das Paar von Hauptrahmen (22L, 22R) und das vordere Membranventil (73) überlappen einander in einer Seitenansicht von dem Fahrzeug.

9. Das Satteltyp - Fahrzeug nach irgendeinem vorhergehenden Anspruch,
wobei der vordere Zylinder (31) eine Vielzahl Zylindern umfasst, welche in einer Reihe in einer Querrichtung von dem Fahrzeug angeordnet sind,
das vordere Membranventil (73) umfasst eine Vielzahl von Membranventilen mit vorderen Membranventilelementen (105, 106), welche in einer Reihe in der Querrichtung von dem Fahrzeug angeordnet sind, und
die Vielzahl von vorderen Membranventilelementen (105, 106) sind durch ein gemeinschaftliches Gehäuseelement (107) untergebracht.

10. Das Satteltyp - Fahrzeug nach irgendeinem vorhergehenden Anspruch,
wobei der hintere Zylinder (32) umfasst eine Vielzahl von Zylindern, welche in einer Reihe in einer Querrichtung von dem Fahrzeug angeordnet sind,
das hintere Membranventil (74) umfasst eine Vielzahl von Membranventilen mit hinteren Membranventilelementen (115, 116), welche in einer Reihe in der Querrichtung von dem Fahrzeug angeordnet sind, und
die Vielzahl von hinteren Membranventilelementen (115, 116) sind durch ein gemeinschaftliches Gehäuseelement (117) untergebracht.

11. Das Satteltyp - Fahrzeug nach irgendeinem vorhergehenden Anspruch,
wobei ein Kraftstofftank (17) auf das Satteltyp - Fahrzeug aufgelegt ist, um so einen Bereich, welcher sich von einer oberen Seite von dem Luftfilter (40) in Richtung einer Rückseite von dem Fahrzeug erstreckt, zu bedecken.

## Revendications

1. Véhicule du type à selle comprenant :
un cadre d'ossature (11) ;
un moteur (12) monté sur le cadre d'ossature (11), le moteur (12) comprenant un cylindre avant (31) dirigé vers un côté avant du véhicule et un cylindre arrière (32) dirigé vers un côté arrière du véhicule ;
un épurateur d'air (40) disposé dans un espace défini entre le cylindre avant (31) et le cylindre arrière (32) dans une partie supérieure du moteur (12) ; et
un système d'alimentation en air secondaire (70) ayant un clapet à lame (72) entre l'épurateur d'air (40) et un passage d'échappement du moteur (12), le système d'alimentation en air secondaire (70) étant adapté pour fournir de l'air secondaire provenant de l'épurateur d'air (40) dans le passage d'échappement du moteur (12) ou pour arrêter l'alimentation en air secondaire,
dans lequel un conduit d'admission (51L, 51R) pour guider de l'air dans l'épurateur d'air (40) est raccordé à un côté de l'épurateur d'air (40),
le clapet à lame (72) comprend un clapet à lame avant (73) utilisé pour le cylindre avant (31) et un clapet à lame arrière (74) utilisé pour le cylindre arrière (32), le véhicule du type à selle étant **caractérisé en ce que** :
le clapet à lame avant (73) est disposé sur une partie avant de l'épurateur d'air (40) et le clapet à lame arrière (74) est disposé sur une partie arrière de l'épurateur d'air (40).

2. Véhicule du type à selle selon la revendication 1,
dans lequel l'épurateur d'air (40) comprend un corps de carter (52) et un élément (55) disposé à l'intérieur du corps de carter (52),
le corps de carter (52) est scindé par l'élément (55) en un côté propre (61) et un côté sale (62), le côté propre (61) étant formé sur un côté supérieur du corps de carter (52) et le côté sale (62) étant formé sur un côté inférieur du corps de carter (52) et
le conduit d'admission (51L, 51R) est raccordé au côté sale (62) et le système d'alimentation en air secondaire (70) est raccordé au côté propre (61).

3. Véhicule du type à selle selon la revendication 1 ou 2,
dans lequel le système d'alimentation en air secondaire (70) est pourvu en outre d'une électrovanne (71) adaptée pour fournir de l'air du côté propre (61) au système d'alimentation en air secondaire (70) ou pour arrêter l'alimentation en air, l'électrovanne (71) et le clapet à lame avant (73) étant raccordés par une canalisation amont avant (77) et l'électrovanne (71) et le clapet à lame arrière (74) étant raccordés par une canalisation amont arrière (78), et
une paroi de plafond (91) de l'épurateur d'air (40) est formée avec une partie étagée (92) présentant une différence de hauteur et l'électrovanne (71), la canalisation amont avant (77) et la canalisation amont arrière (78) sont disposées sur le côté d'une partie inférieure de la partie étagée (92).

4. Véhicule du type à selle selon l'une quelconque des revendications précédentes,
dans lequel le corps de carter (52) est formé dans sa partie inférieure avant avec une partie évidée (94) dans laquelle le clapet à lame avant (73) peut être disposé de manière à être entouré par une partie de paroi (93) du corps de carter (52).

5. Véhicule du type à selle selon la revendication 4,
dans lequel la partie évidée (94) est pourvue d'une saillie (95) pour positionner le clapet à lame avant (73).

6. Véhicule du type à selle selon l'une quelconque des revendications 2 à 5,
dans lequel un élément d'appui (98) pour fixer et assujettir le clapet à lame arrière (74) est disposé sur une paroi arrière (97) du corps de carter (52).

7. Véhicule du type à selle selon l'une quelconque des revendications 2 à 6,
dans lequel le corps de carter (52) est scindé en une partie supérieure et une partie inférieure, sa face de division (54e) étant inclinée par rapport à la direction longitudinale du véhicule et
le clapet à lame avant (73) est disposé sur une moitié inférieure (54) du corps de carter (52) avec le clapet à lame avant (73) et le clapet à lame arrière (74) qui sont aménagés à des hauteurs sensiblement égales.

8. Véhicule du type à selle selon l'une quelconque des revendications précédentes, dans lequel le cadre d'ossature (11) comprend un tuyau de tête (21) et une paire de cadres principaux (22L, 22R) s'étendant vers l'arrière du tuyau de tête (21), le moteur (12) et l'épurateur d'air (40) sont disposés entre la paire de cadres principaux (22L, 22R) et
la paire de cadres principaux (22L, 22R) et le clapet à lame avant (73) se chevauchent mutuellement dans une vue latérale du véhicule.

9. Véhicule du type à selle selon l'une quelconque des revendications précédentes, dans lequel le cylindre avant (31) comprend une pluralité de cylindres agencés en rangée dans la direction transversale du véhicule,
le clapet à lame avant (73) comprend une pluralité de clapets à lame avec des éléments de clapet à lame avant (105, 106) qui sont aménagés en rangée dans la direction transversale du véhicule et
la pluralité d'éléments de clapet à lame avant (105, 106) est logée par un élément de carter uni (107).

10. Véhicule du type à selle selon l'une quelconque des revendications précédentes, dans lequel le cylindre arrière (32) comprend une pluralité de cylindres agencés en rangée dans la direction transversale du véhicule,
le clapet à lame arrière (74) comprend une pluralité de clapets à lame avec des éléments de clapet à lame arrière (115, 116) agencés en rangée dans la direction transversale du véhicule et
la pluralité d'éléments de clapet à lame arrière (115,116) est logée par un élément de carter uni (117).

11. Véhicule du type à selle selon l'une quelconque des revendications précédentes, dans lequel un réservoir de carburant (17) est disposé sur le véhicule du type à selle de manière à couvrir une zone s'étendant d'un côté supérieur de l'épurateur d'air (40) vers un côté arrière du véhicule.
